Europäisches Patentamt

European Patent Office

Office européen des brevets

(19)

(11) Publication number: **0 305 590 B1**

## EUROPEAN PATENT SPECIFICATION

(45) Date of publication of patent specification: **18.12.91**

(21) Application number: **87116946.2**

(22) Date of filing: **20.06.85**

(51) Int. Cl.⁵: **B60R 1/06**

(60) Publication number of the earlier application in accordance with Art.76 EPC: **0 166 378**

(54) **Electrically foldable door mirror.**

(30) Priority: **28.06.84 JP 131995/84**
**19.02.85 JP 29472/85**

(43) Date of publication of application:
**08.03.89 Bulletin 89/10**

(45) Publication of the grant of the patent:
**18.12.91 Bulletin 91/51**

(84) Designated Contracting States:
**DE GB**

(56) References cited:
**EP-A- 0 146 888**
**DE-U- 7 503 867**
**DE-U- 8 209 925**

(73) Proprietor: **MURAKAMI KAIMEIDO CO., LTD**
**12-25, Miyamoto-cho Shizuoka-shi**
**Shizuoka 422(JP)**

(72) Inventor: **Kumai, Toshiyuki**
**78-4, Hyodayo**
**Fujieda-shi Shizuoka 426(JP)**
Inventor: **Nakayama, Kiyoshi**
**11-10, Nishi-kusabuka-cho**
**Shizuoka-shi Shizuoka 420(JP)**
Inventor: **Ito, Yasutoshi**
**203, Kiei Building, 7-17 Nishi-chiyoda-cho**
**Shizuoka-shi Shizuoka 420(JP)**

(74) Representative: **Riederer Freiherr von Paar zu**
**Schönau, Anton et al**
**Van der Werth, Lederer & Riederer Freyung**
**615 Postfach 2664**
**W-8300 Landshut(DE)**

## Description

### BACKGROUND OF THE INVENTION

#### 1. Field of the Invention

The present invention relates to an electrically foldable door mirror for a motor vehicle. More particularly, the invention relates to a door mirror which can be folded forward or backward both by remote control from inside the motor vehicle and by manual operation, said door mirror being smoothly folded also when it receives an external shock.

#### 2. Description of the Prior Art

In conventional door mirrors, the mirror body is attached to its base by means of a coiled spring, etc. so that the mirror body turns forward or backward when the door mirror receives a strong external force, in order to weaken the shock and ensure safety. However, because the door mirror protrudes sideways from the vehicle body more than the fender mirror, the door mirror offers problems when a motor vehicle equipped therewith is parked in a narrow space or transported. Particularly when a motor vehicle equipped with door mirrors enters a three-dimensional car park, the door mirrors may hit a side wall, iron frame, etc. of the car park and do damage thereto as well as to the door mirrors themselves. Some known door mirrors can be kept in a folded state within the outermost line of the vehicle body in order to prevent the aforesaid problems. For example, the door mirrors are mechanically kept in a folded state by means of an engaging catch, etc. provided in a mirror folding mechanism.

In conventional foldable door mirrors, the vehicle driver has to get out of the vehicle each time he folds them or returns them to their normal positions. With a view to preventing such a trouble, DE-U-7 503 867 describes an electrically foldable door mirror, comprising a base, a shaft erected on said base, and a mirror body rotatably attached to said shaft, electric driving means supported by a frame within said mirror body, a pinion secured to the output shaft of said electric driving means, said pinion being engaged with a clutch gear attached to a first upper portion of said shaft, a first upper clutch disposed between one surface of said clutch gear and a first end of said shaft, and a second lower clutch disposed between a surface of said frame at the position of insertion of said shaft and the opposing surface of said base, whereby springs act generally parallel to the axis of said shaft so as to give a force of engagement to both of said clutches, said first upper clutch being more strongly engaged than said second lower clutch so that said second lower clutch is disengaged earlier when said mirror body is turned. Further, Japanese Patent Application No. Sho 58-247796 published as JP-A-60-143 154 with the publication date of 29.07.1985 describes a door mirror, containing an electric motor and gears within its mirror body, which can be electrically folded by remote control from inside the motor vehicle. This prior art door mirror comprises mounting arms formed on the mounting surface of a base to be attached to the triangular window of a car, mounting brackets formed at one side edge of a body support attached inside a mirror body, a shaft fitted to shaft inserting holes formed at the mounting arms and the brackets to attach swingably forward or backward of the car the mirror body to the base, a reversible electric motor fixed to the mounting surface, and swinging means of the body support attached to the mounting brackets, the swinging means and the output shaft of the motor being fixed to the mounting surface coupled through reducing gear means. The mirror body can be readily swung manually by providing means for suitably disengaging the connection of the reversible electric motor with the swinging means. This door mirror has only one ball clutch in a pivot shaft, so that the gears receive an excessive load and the mirror body does not smoothly turn when it is folded by hand or by other external force.

Such electrically foldable door mirrors should have means for automatically stopping the electric driving means of the mirror body when the mirror body has come to a position of turning limit or a normal (erected) position, but the stopping means in known door mirrors is complicated and expensive.

### SUMMARY OF INVENTION

It is an object of the present invention to provide an electrically foldable door mirror which can be folded forward or backward by remote control from inside the motor vehicle not only to a desired angle but also to the very limit just before contacting the outer panel of the motor vehicle, and can be maintained in such a state. This results from the invention as characterized in claim 1 which provides an electrically foldable door mirror having means for stopping the electric driving means of the mirror body automatically and surely, said stopping means being not expensive to manufacture and easy to attach. In the claim, the terms "upper" and "lower" clutch serve to discriminate the clutches, a different e.g. an upside-down construction also being claimed to be covered.

Thus, in the present invention, when the mirror body has turned to the position of the turning limit or returned to the normal position, the electric driving means is automatically stopped and the mirror body is maintained in the position. At the time of manual operation, the upper clutch is disengaged after the lower clutch, and the mirror body can be turned to a desired angle. When the mirror body receives a shock, both of the upper and lower clutches are disengaged at the same time, and the mirror body is turned. Whether the mirror body is turned by hand or by other external force, the gears do not receive any load and they are free from troubles.

DESCRIPTION OF THE DRAWINGS

Fig. 1 is a partially cutaway front view of an electrically foldable door mirror;
Fig. 2 is an enlarged sectional view showing a portion thereof;
Fig. 3 is a front view of means for automatically stopping electric driving means;
Fig. 4 is a sectional view taken on line IV-IV of Fig. 3;
Fig. 5 is a perspective view showing the relation between a contact piece and a printed circuit;
Fig. 6 is a perspective view of said contact piece;
Fig. 7A is a bottom view showing said contact piece disposed in one direction;
Fig. 7B is a bottom view showing said contact piece disposed in the opposite direction;
Figs. 8 to 10 are enlarged plan views showing the positions of contact between contact pieces and said printed circuit when the mirror body is in the neutral position, the position of the rear turning limit, and the position of the front turning limit;
Fig. 11 is a perspective view showing a fixed clutch and a clutch gear;
Figs. 12 and 13 are perspective views showing modified examples of Fig. 11;
Fig. 14 is a plan view showing the relation between a pinion and said clutch gear.

DETAILED DESCRIPTION OF THE PREFERRED EMBODIMENTS

The present invention will now be described with reference to the attached drawings. It is to be noted that the attached drawings show a right hand door mirror, drawings of a left-hand door mirror being omitted.

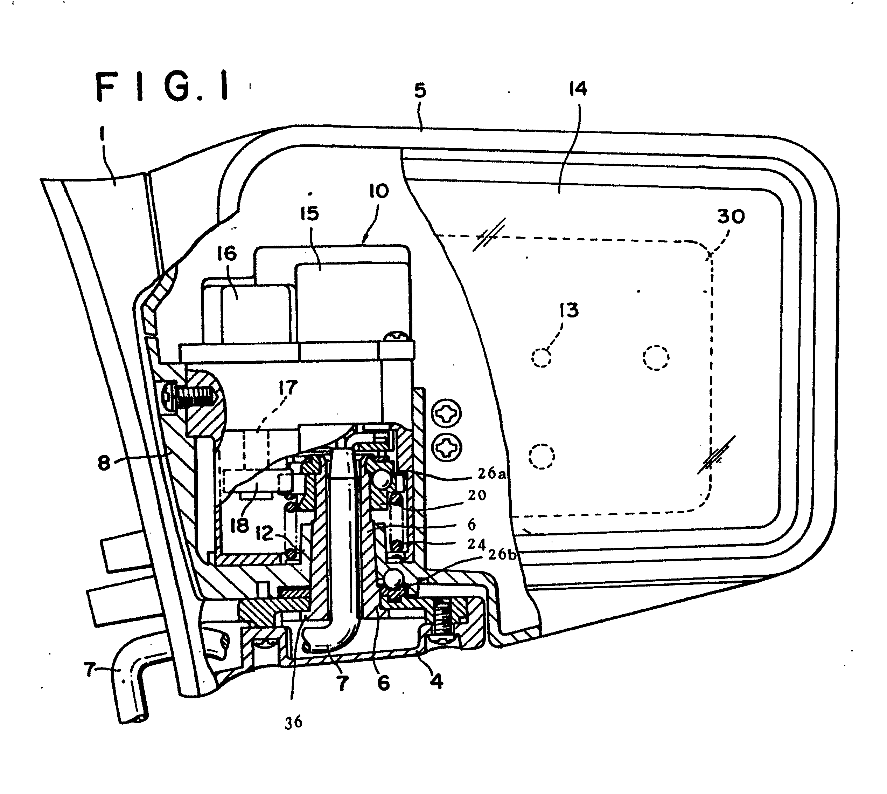

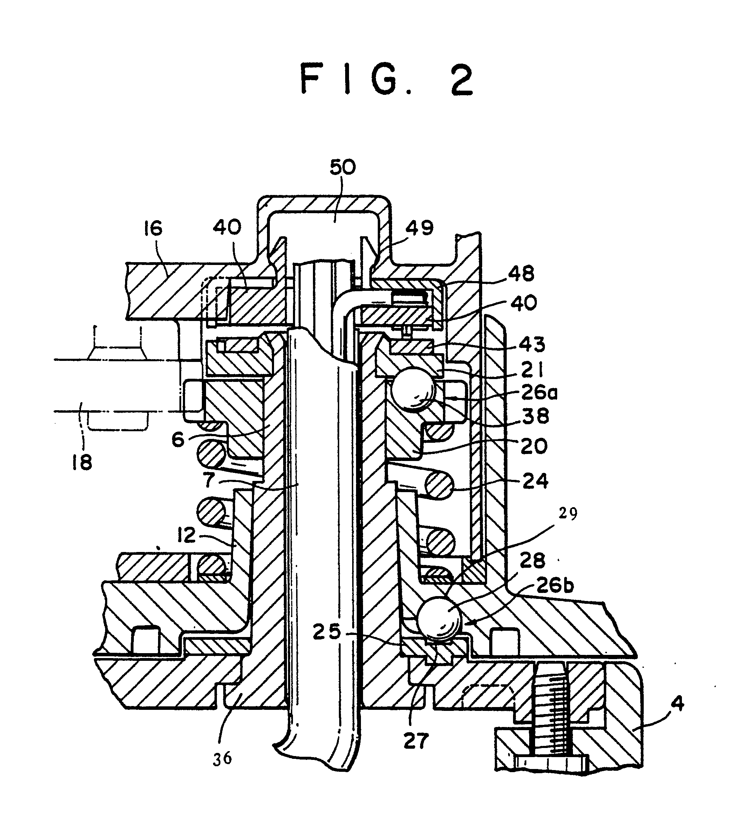

In the embodiment, as shown in Figs. 1 and 2, electric driving means 10, such as a DC electric motor with reduction gears, is disposed within a mirror body 5, a pinion 18 being fastened to the output shaft of said electric driving means 10, said pinion 18 being engaged with a clutch gear 20 attached to the upper portion of a shaft 6, an upper clutch 26a being disposed between the upper surface of said clutch gear 20 and the upper end of said shaft 6, a lower clutch 26b being disposed between the lower surface of a frame 8 at the position of insertion of said shaft 6 and the opposing surface of a base 1, a coiled spring 24 being provided around said shaft 6 so as to give a force of engagement to both of said clutches 26a, 26b, said upper clutch 26a being slightly more strongly engaged than said lower clutch 26b. When the door mirror is electrically folded, the rotation of the pinion 18 disengages the weakly engaged lower clutch 26b so that the mirror body 5 can be turned. In manual operation, when the mirror body 5 is forcibly turned by hand, the lower clutch 26b is disengaged and then the upper clutch 26a is disengaged so that the mirror body 5 can be turned, because the pinion 18 is engaged with the clutch gear 20. When the mirror body 5 receives an external shock, both the upper and lower clutches 26a, 26b are disengaged at the same time so that the mirror body 5 can be turned. In this way, the clutches 26a, 26b are adapted to operate effectively according to the force exerted on the mirror body 5.

Parts of the door mirror will now be described in detail. In Figs. 1 and 2, the base 1 is fastened, for example, to the triangular corner of a door window of a motor vehicle. Numeral 4 represents a bracket extending approximately horizontally as the lower portion of the base 1, numeral 5 a mirror body, numeral 6 a shaft erected on the bracket 4, numeral 14 represents a mirror, and numeral 13 a pivot thereof.

Since the mirror body 5 illustrated in Fig. 1 contains an actuator for changing the angle of reflection of the mirror, the shaft 6 has a central hole through which a harness 7 passes. When the mirror body 5 does not contain such an actuator, the shaft 6 is not required to be hollow. In Fig. 1, the shaft 6 is a member separate from the base 1, and is secured thereto at its root portion 36 by means of screws. However, the shaft 6 may be formed integrally with the base 1, and in this case securing by means of screws is eliminated.

The frame 8 is secured within the mirror body 5, and said actuator is disposed approximately in the center of the frame 8. The frame 8 supports, near the base 1, the electric driving means 10 which gives a driving force for the folding operation of the door mirror, and the frame 8 has a shaft bearing 12 into which the shaft 6 is inserted. The electric driving means 10 comprises a DC electric motor 15 and a gear box 16 containing reduction gears and having an output shaft 17. The pinion 18 is secured to the output shaft 17 of the gear box 16. In Fig. 1, the pinion 18 is secured to the output shaft 17 e.g. by press fit or by means of a key and a key way or a pin.

The shaft bearing 12 of the frame 8 is slightly tapered, and the shaft 6 has a taper portion corresponding thereto. When the shaft bearing 12 of the frame 8 is put on the taper portion of the shaft 6, the whole frame 8 is rotatable and axially slidable with relation to the shaft 6.

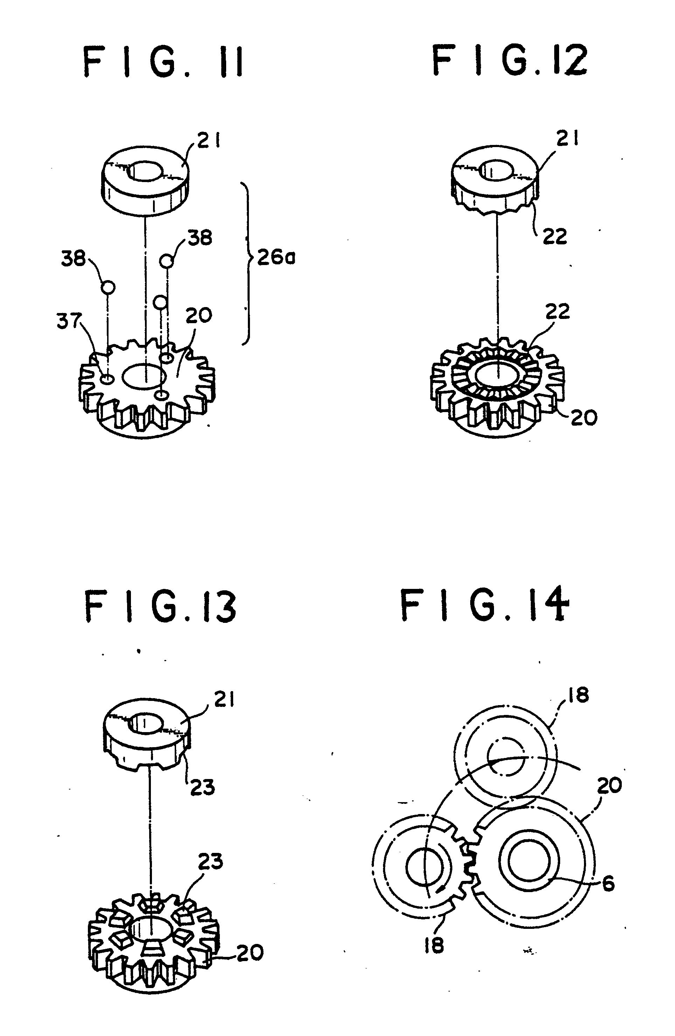

The shaft 6 has a cylindrical portion above said taper portion, the clutch gear 20 being engaged with said pinion 18 is attached to the cylindrical portion, and has a narrow portion above said cylindrical portion, a fixed clutch 21 being fixed to said narrow portion. The opposing surfaces of the clutch gear 20 and the fixed clutch 21 form the upper clutch 26a which according to Fig. 11 is a ball clutch comprising a plurality of (three in Fig. 11) holes 37 respectively provided in the upper surface of the clutch gear 20 and the lower surface of the fixed clutch 21, and balls 38 fitted in said holes 37. Alternatively the upper clutch 26a may comprise sidge-shaped catches 22(Fig.12) or tooth-shaped catches 23(Fig. 13).

The coiled spring 24 is disposed around the shaft bearing 12 so as to give a force of engagement to both of said upper clutch 26a and lower clutch 26b.

The lower clutch 26b is a ball clutch comprising holes 27, 29 provided in a plurality of (three, for example) positions on a circle both on a surface in a stopper 25 disposed around the root portion 36 of the shaft 6, and a corresponding surface of the frame 8, and balls 28 fitted in said holes 27, 29. The engagement of the lower clutch 26b is made weaker than that of the upper clutch 26a by, for example, fitting the balls 28 of the lower clutch 26b more shallowly in the holes or making the balls 28 larger, as compared with the balls 38 of the upper clutch 26a. Thus, for example when the mirror body 5 is turned by hand, the lower clutch 26b is disengaged slightly earlier than the upper clutch 26a so that the mirror body 5 can be turned smoothly.

According to the present invention, it is possible not only to turn the mirror body 5 to a desired angle by automatic operation, manual operation, etc. but also to set the limits of turning of the mirror body 5 in order to prevent damage to the outer panel of the vehicle. For this purpose, the door mirror has detecting means.

The means for automatically stopping the electric driving means 10 when the mirror body 5 has come to the neutral position or the position of the turning limit is provided between one surface of the fixed clutch 21 fixed to the upper end of the shaft 6 and a surface of the mirror body 5 opposing said one surface of the fixed clutch 21, said stopping means comprising a printed circuit 43 and contact pieces 46 slidable thereon.

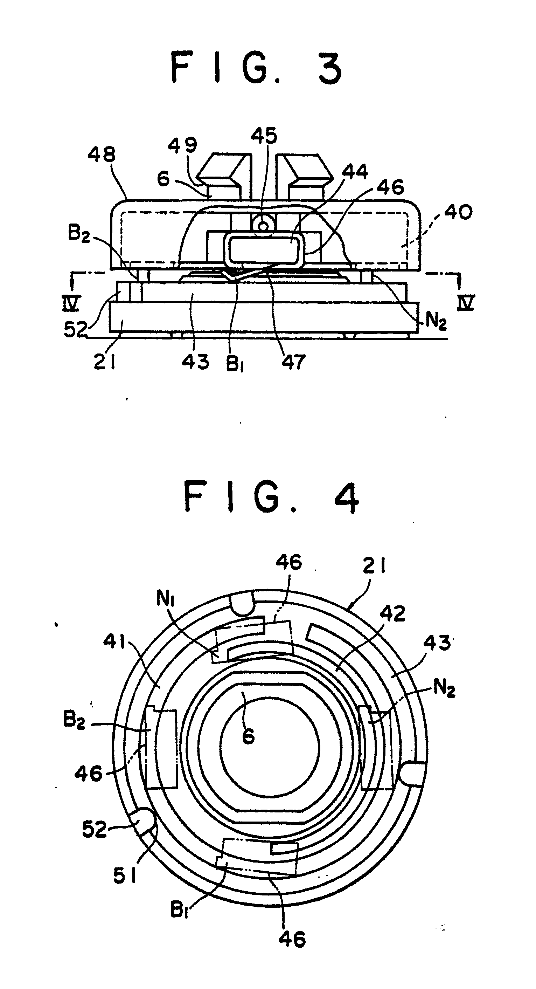

That is, as shown in Figs. 2 and 3, the stopping means comprises the fixed clutch 21 fixed to the upper portion of the shaft 6, the printed circuit 43 provided on the upper surface of the fixed clutch 21, a holder 40 attached above the fixed clutch 21 to the pivotal center of the mirror body 5, and four contact pieces 46 provided on the periphery of the holder 40. The holder 40 has a cap 48 on for the protection of said contact pieces 46. The central cylinder of the holder 40 passing through the central hole of the cap 48 has an undercut 49 which is engaged with a recess 50 formed under said gear box 16.

· The printed circuit 43 has two arc-shaped conductive plates 41, 42 having different radii, one being disposed on the inside of the other. The conductive plate 41 contacts the contact pieces 46 having contacts $B_1$, $B_2$ of a switch for detecting the position of the rear turning limit. The conductive plate 41 is disposed on the outside of the other conductive plate 42, and has the shape of an arc with an angle of 340°. The conductive plate 42 contacts the contact pieces 46 having contacts $N_1$, $N_2$ of a switch for detecting the neutral position. The conductive plate 42 has the shape of an arc with a shorter length (about 200°, phase being shifted) and a smaller radius as compared with said conductive plate 41.

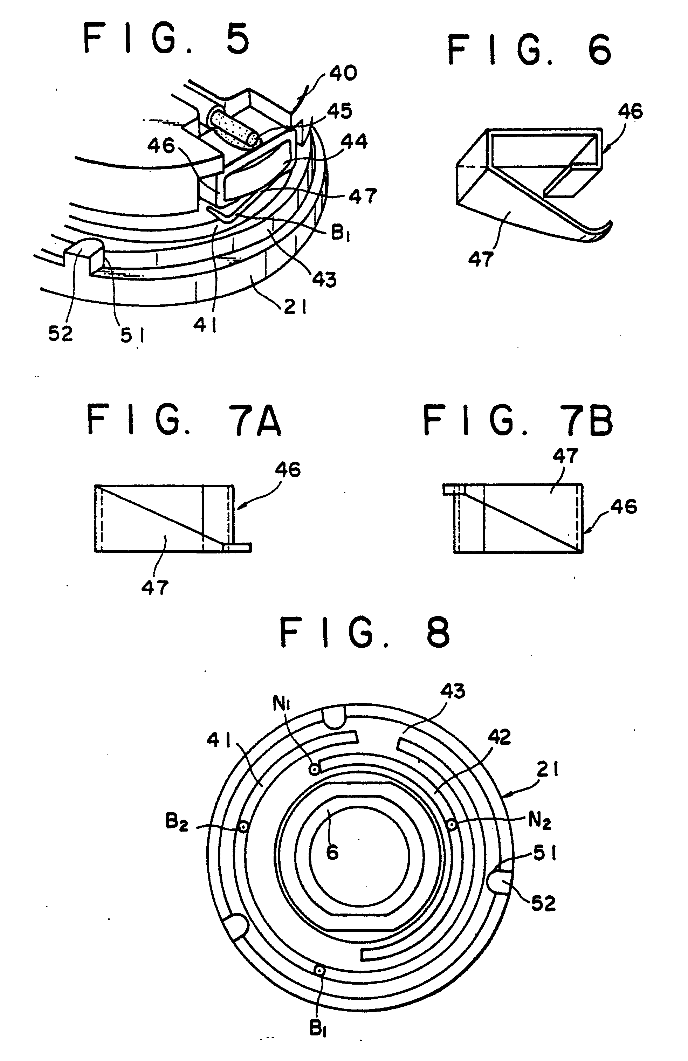

The printed circuit 43 is provided on its periphery with three semicircular notches 51, in which projections 52 of said fixed clutch 21 are fitted to prevent rotation (Figs. 4 and 5).

Each contact piece 46 comprises a substantially rectangular main portion and a leg portion 47 extending obliquely downward therefrom (Fig. 6). The main portion is supported on a supporting member 44 provided on the periphery of said holder 40. A terminal 45 is soldered to the upper surface of said man body. See Figs. 3 and 5.

Said leg portion 47 of the contact piece 46 has a shape similar to an equi-angled triangle when seen from above, a portion near the vertex thereof being bent so as to serve as a contact. The contact is not in the central position of the contact piece 46. The contact contacts the printed circuit 43 at different positions with respect to the radius thereof according to whether the contact piece 46 is attached to the supporting member 44 in the direction shown in Fig. 7A or in the opposite direction shown in Fig. 7B. That is, the contact of the contact piece 46 is in the opposite positions with respect to the circumferential direction and the radial direction according to the direction in which the contact piece 46 is attached. For example, if the contact pieces 46 having the contacts $N_1$, $N_2$ for detecting the neutral position are attached in the direction shown in Fig. 7A and the contact pieces 46 having

the contacts $B_1$, $B_2$ for detecting the position of the rear turning limit are attached in the opposite direction shown in Fig. 7B, then the contact pieces 46 for detecting the neutral position slide on the inner conductive plate 42 and the contact pieces 46 for detecting the position of the rear turning limit slide on the outer conductive plate 41 as shown in Fig. 4.

The operation of the door mirror according to the embodiment will now be described.

Figs. 1 and 2 show the state that the mirror body 5 is outwardly erected, that is, the mirror body 5 stays in the normal (neutral) position. In this state, the upper clutch 26a and the lower clutch 26b are respectively engaged by the force of the coiled spring 24. Also, the contact pieces 46 are in contact with the printed circuit 43 as shown in Fig. 4, and the DC electric motor 15 is stopped.

The rotation of the DC electric motor 15 is slowed down by the gear box 16 and transmitted through the pinion 18 to the clutch gear 20 so as to cause relative rotation to the shaft bearing 12 into which the shaft 6 is inserted. Within the range of the torque required for raising the balls 28 from the holes 27 in the stopper 25 around the root portion 36 of the shaft 6 onto the upper surface of the stopper 25 while the balls 28 are held in the holes of the frame 8, the upper clutch 26a between the clutch gear 20 and the fixed clutch 21 is not disengaged. Therefore, the clutch gear 20 is not rotated and the pinion 18 rotates both round the clutch gear 20 and on its axis as shown in Fig. 14 so as to turn the mirror body 5.

Meanwhile, the positions of contact between the contact pieces 46 and the printed circuit 43 change as described below. Figs. 8 to 10 show the positions of contact between the contact pieces 46 and the printed circuit 43 when the mirror body 5 is in the neutral position, the position of the rear turning limit and the position of the front turning limit. The central point of each mark ⊙ in Figs. 8 to 10 shows the position of contact.

When the mirror body 5 is in the neutral position (Fig. 8), both the contacts $B_1$ and $B_2$ are in contact with the outer conductive plate 41 and said switch for detecting the position of the rear turning limit is closed. However, the contact $N_1$ is not in contact with the inner conductive plate 42 and said switch for detecting the neutral position is open. Therefore, the DC electric motor 15 is stopped and the mirror body 5 is kept in the neutral (erected) position. In this state, if the operation switch (not shown) is turned on, the DC electric motor 15 is actuated and the mirror body 5 is turned backward because said switch for detecting the rear turning limit is closed. At this time, the contact pieces 46 turn clockwise.

When the mirror body 5 is turned by an angle

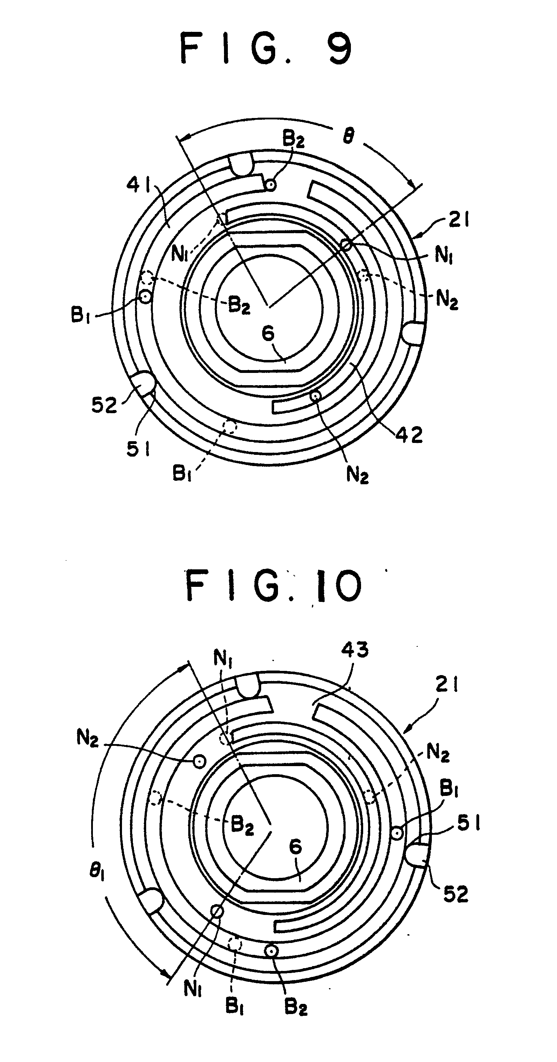

$\theta$ from the neutral position to the position shown in Fig. 9, the contacts $N_1$, $N_2$ are in contact with the conductive plate 42 and the switch for detecting the neutral position is closed. Also, the contact $B_1$ is in contact with the conductive plate 41, but the contact $B_2$ is not in contact with the conductive plate 41, thus the switch for detecting the rear turning limit being open. Therefore, the DC electric motor 15 is stopped and the mirror body 5 is kept in the position of the rear turning limit. In this state, if the operation switch is turned on again, the DC electric motor 15 is reversed. The contact pieces 46 are then turned counterclockwise and the mirror body 5 is returned to the neutral position.

Fig. 10 shows the positional relation between the contacts $N_1$, $N_2$, $B_1$, $B_2$ and the conductive plates 41, 42 when the mirror body 5 is in the position of the front turning limit. In the illustrated example, the mirror body 5 cannot be turned forward by automatic operation. However, it is possible to manually disengage the upper clutch 26a and lower clutch 26b and turn the mirror body 5 forward from the neutral position by an angle $\odot_1$. In Fig. 10, the contacts $N_1$, $N_2$ are not in contact with the conductive plate 42 and the switch for detecting the neutral position is open, while the contacts $B_1$, $B_2$ are in contact with the conductive plate 41 and the switch for detecting the position of the rear turning limit is closed. In this state, if the operation switch is turned on, the mirror body 5 is turned from the position of the front turning limit to the neutral position (the contact pieces 46 turn clockwise). When the mirror body 5 is between the neutral position and the position of the rear turning limit, both the switch for detecting the neutral position and the switch for detecting the rear turning limit are closed.

According to the present invention, the mirror body can be turned backward and possibly also forward by remotely controlling the electric driving means contained in the mirror body. Since the pinion fixed to the output shaft of the electric driving means is engaged with the clutch gear attached to the upper portion of the shaft, the frame is given a relative rotation on the shaft and the mirror body is surely turned. The upper clutch is disposed between the upper surface of the clutch gear and the upper end of the shaft, and the lower clutch is disposed between the lower surface of the frame at the position of insertion of the shaft and the opposing surface of the base, said upper clutch being more strongly engaged than said lower clutch. Therefore, in automatic operation, only the lower clutch is disengaged, the engagement of the upper clutch being maintained, and the mirror body is turned by the pinion and the clutch gear. In manual operation, the upper clutch is disengaged after the lower clutch is disengaged, and therefore the mirror body can be stopped smoothly at a desired position. When the mirror body receives an external shock, both the upper clutch and the lower clutch are disengaged at the same time so that the mirror body is turned by the external force.

The door mirror has means for automatically stopping the electric driving means, said stopping means being disposed between one surface of the fixed clutch fixed to the upper end of said shaft and a surface of the mirror body opposing said one surface of the fixed clutch, said stopping means comprising a printed circuit and contact pieces slidable thereon. Therefore, in the position of the turning limit, the switch for detecting the position of the turning limit is open, and the mirror body is automatically stopped and kept in this position. If the electric driving means is reversed by means of the operation switch, the mirror body is turned from the position of the turning limit to the neutral (erected) position and kept in the neutral position.

## Claims

1. Electrically foldable door mirror comprising a base (1), a shaft (6) erected on said base, a mirror body (5) rotatably attached to said shaft, electric driving means (10) supported by a frame (8) within said mirror body for turning said mirror body, and a pinion (18) secured to the output shaft (17) of said electric driving means, said pinion being engaged with a clutch gear (20) attached to a first portion of said shaft, charcterized by means for automatically stopping said electric driving means, said stopping means being disposed between one surface of a fixed clutch (21) fixed to a first end of said shaft (6) and a surface of said mirror body (5) opposing said one surface of the fixed clutch, said stopping means comprising a printed circuit (43) and contact pieces (46) slidable thereon.

2. Electrically foldable door mirror as claimed in claim 1, characterized in that said mirror body (5) has a recess (50) in a position opposing said first end of said shaft (6), and a holder (40) of the contact pieces (46) is engaged with said recess.

3. Electrically foldable door mirror as claimed in claim 2, characterized in that said holder (40) holds four contact pieces (46) consisting of a pair of contact pieces for detecting the erected position of said mirror body (5) and another pair of contact pieces for detecting the position of the rear turning limit of said mirror body.

4. Electrically foldable door mirror as claimed in any of claims 1 to 3, characterized in that said printed circuit (43) has two arc-shaped conductive plates (41, 42) having different radii, one being disposed on the inside of the other, all of said contact pieces (46) being in contact with said printed circuit when said mirror body (5) is in a movable range, one of said two pairs of contact pieces being disconnected from said printed circuit when said mirror body is in the erected position or in the position of the turning limit.

5. Electrically foldable door mirror according to any of claims 1 to 4, charcterized in that an upper clutch (26a) is disposed between one surface of said clutch gear (20) and a first end of said shaft (6), a lower clutch (26b) is disposed between a surface of said frame (8) at the position of insertion of said shaft and the opposing surface of said base (1), and at least one spring (24) acts generally parallel to the axis of said shaft so as to give a force of engagement to both of said clutches, said upper clutch being more strongly engaged than said lower clutch so that said second clutch is disengaged earlier when said mirror body is turned.

6. Electrically foldable door mirror as claimed in claim 5, characterized in that the clutch gear (20) is attached to the upper portion of the shaft (6), the upper clutch (26a) is disposed between the upper surface of the clutch gear (20) and the upper end of the shaft, and the lower clutch (26b) is disposed between the lower surface of the frame (8) and the opposing surface of the base (1), and that the at least one spring is a coiled spring (24) provided around the shaft (6).

7. Electrically foldable door mirror as claimed in claim 5 or 6, charcterized in that each of said upper or lower clutches (26a, 26b) comprises a plurality of balls (28) being fitted in holes (27, 29), and is adapted to make click action so that said mirror body (5) can be turned by hand.

8. Electrically foldable door mirror as claimed in any of claims 5 to 7, characterized in that said first clutch (26a) is adapted to be disengaged when the load becomes larger, so that a mechanism (15, 16) driving said pinion (18) is not overloaded.

## Revendications

1. Rétroviseur de portière rabattable électriquement, comprenant un socle (1), une tige (6) dressée sur ce socle, un corps de rétroviseur (5) monté pivotant sur ladite tige, des moyens d'entraînement électriques (10) supportés par un cadre (8) dans ledit corps de rétroviseur pour faire pivoter celui-ci, et un pignon (18) fixé à l'arbre de sortie (17) desdits moyens d'entraînement électriques, ce pignon étant en prise avec une roue dentée d'embrayage (20) montée sur une première partie de ladite tige, caractérisé par des moyens pour arrêter automatiquement lesdits moyens d'entraînement électriques, ces moyens d'arrêt étant disposés entre une surface d'un embrayage fixe (21) fixé à une première extrémité de ladite tige (6) et une surface dudit corps de rétroviseur (5) située en vis-à-vis de ladite surface de l'embrayage fixe, ces moyens d'arrêt comprenant un circuit imprimé (43) et des pièces de contact (46) qui peuvent glisser sur celui-ci.

2. Rétroviseur de portière rabattable électriquement selon la revendication 1, caractérisé en ce que ledit corps de rétroviseur (5) présente un creux (50) en vis-à-vis de ladite première extrémité de ladite tige (6), et en ce qu'un support (40) pour des pièces de contact (46) est engagé dans ce creux.

3. Rétroviseur de portière rabattable électriquement selon la revendication 2, caractérisé en ce que ledit support (40) maintient quatre pièces de contact (46) consistant en une paire de pièces de contact pour détecter la position dressée dudit corps de rétroviseur (5) et en une autre paire de pièces de contact pour détecter la position de la limite de rotation en arrière dudit corps de rétroviseur.

4. Rétroviseur de portière rabattable électriquement selon l'une quelconque des revendications 1 à 3, caractérisé en ce que ledit circuit imprimé (43) comporte deux plaques conductrices en arc de cercle (41, 42) ayant des rayons differents, l'une étant disposee en dedans de l'autre, toutes lesdites pièces de contact (46) etant en contact avec ledit circuit imprimé lorsque ledit corps de rétroviseur (5) est dans sa trajectoire de déplacement, l'une des deux paires de pièces de contact étant hors de contact avec ledit circuit imprime lorsque ledit corps de rétroviseur est en position dressée ou en position de limite de rotation.

5. Rétroviseur de portière rabattable electriquement selon l'une quelconque des revendications 1 à 4, caractérisé en ce qu'un embrayage supérieur (26a) est disposé entre une surface de ladite roue dentée d'embrayage (20) et une première extrémité de ladite tige (6), un embrayage inférieur (26b) est disposé entre une surface dudit cadre (8) au point d'insertion de ladite tige et la surface opposée dudit socle (1), et en ce qu'au moins un ressort (24) agit dans une direction généralement parallèle à l'axe de ladite tige de façon à communiquer une force d'accouplement aux deux embrayages, ledit embrayage supérieur étant plus fortement accouplé que ledit embrayage inférieur, de sorte que ce second embrayage soit désaccouplé plus tôt lorsque ledit corps de rétroviseur est amené à pivoter.

6. Rétroviseur de portière rabattable électriquement selon la revendication 5, caractérisé en ce que la roue dentée d'embrayage (20) est montée sur la partie superieure de la tige (6), l'embrayage supérieur (26a) est dispose entre la surface supérieure de la roue dentée d'embrayage (20) et l'extremité superieure de la tige et l'embrayage inférieur (26b) est disosé entre la surface inférieure du cadre (8) et la surface opposée du socle (1), et en ce que ledit ressort est un ressort hélicoïdal (24) placé autour de la tige (6).

7. Rétroviseur de portière rabattable électriquement selon la revendication 5 ou 6, caractérisé en ce que chacun des embrayages supérieur et inférieur (26a, 26b) comprend plusieurs billes (28) logées dans des trous (27, 29) et est agencé de façon à produire un effet d'encliquetage, de telle sorte que ledit corps de rétroviseur (5) puisse être tourné à la main.

8. Rétroviseur de portière rabattable electriquement selon l'une quelconque des revendications 5 à 7, caractérisé en ce que ledit premier embrayage (26a) est agence ce façon à être désaccouplé lorsque la sollicitation devient excessive, de sorte qu'un mecanisme (15, 16) entraînant ledit pignon (18) ne soit pas surcharge.

**Patentansprüche**

1. Elektrisch klappbarer Türspiegel mit einer Basis (1), einer von der Basis aufgerichtet abstehenden Welle (6), einem drehbar an der Welle befestigten Spiegelkörper (5), einer von einem Rahmen (8) innerhalb des Spiegelkörpers getragenen elektrischen Antriebseinrichtung (10) zum Drehen des Spiegelkörpers und einem mit der Abtriebswelle (17) der elektrischen Antriebseinrichtung verbundenen Zahnrad (18), das mit einem an einem ersten Teil der Welle sitzenden Kuppelzahnrad (20) kämmt, gekennzeichnet durch eine Einrichtung zum automatischen Anhalten der elektrischen Antriebseinrichtung, wobei die Einrichtung zum Anhalten zwischen einer ersten Fläche einer festen Kupplung (21), die am ersten Ende der Welle (6) befestigt ist, und einer dieser ersten Fläche der festen Kupplung gegenüberliegenden Fläche des Spiegelkörpers (5) angeordnet ist und eine gedruckte Schaltung (43) und auf dieser gleitende Kontaktstücke (46) umfaßt.

2. Elektrisch klappbarer Türspiegel nach Anspruch 1, dadurch gekennzeichnet, daß der Spiegelkörper (5) an einer dem ersten Ende der Welle (6) gegenüberliegenden Stelle einen zurückgesetzten Teil (50) aufweist, und in den zurückgesetzten Teil ein Kalter (40) für die Kontaktstücke (46) eingreift.

3. Elektrisch klappbarer Türspiegel nach Anspruch 2, dadurch gekennzeichnet, daß der Halter (40) vier Kontaktstücke (46) trägt, nämlich zwei Kontaktstücke zum Feststellen des aufgerichteten Zustands des Spiegelkörpers (5) und zwei Kontaktstücke zum Feststellen der hinteren Drehgrenze des Spiegelkörpers.

4. Elektrisch klappbarer Türspiegel nach einem der Ansprüche 1 bis 3, dadurch gekennzeichnet, daß die gedruckte Schaltung (43) zwei bogenförmige leitfähige Platten (41, 42) mit unterschiedlichen Radien aufweist, von denen eine Platte auf der Innenseite der anderen angeordnet ist, und daß sich alle Kontaktstücke (46) in Kontakt mit der gedruckten Schaltung befinden, wenn sich der Spiegelkörper (5) im beweglichen Bereich befindet, und eines der beiden Paare von Kontaktstükken von der gedruckten Schaltung gelöst ist, wenn sich der Spiegelkörper in der aufgerichteten Stellung oder in der Stellung der Drehgrenze befindet.

5. Elektrisch klappbarer Türspiegel nach einem der Ansprüche 1 bis 4, dadurch gekennzeichnet, daß sich zwischen einer Fläche des Kuppelzahnrads (20) und einem ersten Ende der Welle 6) eine obere Kupplung (26a) befindet, zwischen einer Fläche des Rahmens (8) am Ort der Einführung der Welle und der gegenüberliegenden Fläche der Basis (1) eine untere Kupplung (26b) angeordnet ist und wenigstens eine Feder (24) allgemein parallel zur Achse der Welle so wirkt, daß sie den beiden Kupplungen eine Einkuppelkraft mitteilt, wobei die obere Kupplung stärker einkuppelt als die untere Kupplung, so daß diese zweite Kupplung früher auskuppelt, wenn der Spiegelkörper gedreht wird.

6. Elektrisch klappbarer Türspiegel nach Anspruch 5, dadurch gekennzeichnet, daß das Kuppelzahnrad (20) am oberen Teil der Welle (6) befestigt ist, die obere Kupplung (26a) zwischen der oberen Fläche des Kuppelzahnrads (20) und dem oberen Ende der Welle angeordnet ist und die untere Kupplung (26b) zwischen der Unterseite des Rahmens (8) und der gegenüberliegenden Fläche der Basis (1) angeordnet ist, und daß die wenigstens eine Feder eine Schraubenfeder (24) ist, die um die Welle (6) liegt.

7. Elektrisch faltbarer Türspiegel nach Anspruch 5 oder 6, dadurch gekennzeichnet, daß sowohl die obere als auch die untere Kupplung (26a, 26b) eine Mehrzahl von Kugeln (28) umfaßt, die in Löcher (27, 29) eingepaßt sind, und dazu ausgestaltet ist, eine Schnappwirkung auszuüben, so daß der Spiegelkörper (5) manuell verdreht werden kann.

8. Elektrisch faltbarer Türspiegel nach einem der Ansprüche 5 bis 7, dadurch gekennzeichnet, daß die erste Kupplung (26a) bei größer werdender Belastung auskuppelbar ist, so daß ein das Zahnrad (18) treibender Mechanismus (15, 16) nicht überlastet wird.

F I G. 1

# F I G. 2

# FIG. 3

# FIG. 4

# FIG. 5

# FIG. 6

# FIG. 7A

# FIG. 7B

# FIG. 8

# F I G. 9

# F I G. 10

# F I G. II

# F I G. 12

# F I G. 13

# F I G. 14

14